# EUROPÄISCHE PATENTSCHRIFT

(11) **EP 3 250 918 B1**
(45) Veröffentlichungstag und Bekanntmachung des Hinweises auf die Patenterteilung: **14.03.2018**
(21) Anmeldenummer: 15800743.5
(22) Anmeldetag: 13.11.2015
(51) Int. Cl.: G01N 29/44, G01N 29/14, F04D 15/00, F04D 29/66

(54) **VERFAHREN ZUR DETEKTION VON KAVITATION**
METHOD FOR DETECTING CAVITATION
PROCÉDÉ DE DÉTECTION DE CAVITATION

(30) Priorität: 26.01.2015 DE 102015201203
(43) Veröffentlichungstag der Anmeldung: 06.12.2017
(73) Patentinhaber: Voith Patent GmbH, 89522 Heidenheim (DE)
(72) Erfinder: SCHMIDT, Helmut, 89155 Erbach (DE)
(86) Internationale Anmeldenummer: PCT/EP2015/076500
(87) Internationale Veröffentlichungsnummer: WO 2016/119939

(56) Entgegenhaltungen:
- US-A1- 2008 162 058
- US-A1- 2010 300 683

## Beschreibung

Die vorliegende Erfindung betrifft den Betrieb einer hydraulischen Maschine mit einem Laufrad, insbesondere einer Turbine, Pumpe oder Pumpturbine in einem Wasserkraftwerk.

Kavitation kann beim Betrieb einer hydraulischen Maschine auftreten. In der Regel tritt Kavitation in Betriebsbereichen auf, die abseits des optimalen Betriebsbereiches liegen, für den die hydraulische Maschine hauptsächlich ausgelegt wurde. Kavitation kann zu einem verstärkten Verschleiß der hydraulischen Maschine führen. Das Auftreten von Kavitation in bestimmten Betriebszuständen kann nicht zuverlässig vorhergesagt werden, vor allem in den Übergangsbereichen keine Kavitation - Kavitation. Eine Vielzahl von Umständen beeinflusst das Kavitationsverhalten. Abweichungen in der Vorhersage können sich unter anderem durch den Einfluss von Luftdruck, Wassertemperatur, Sedimentkonzentration im Wasser oder Abnützungsgrad der hydraulischen Flächen ergeben. Dabei ist einerseits die genaue Abhängigkeit der Kavitation von den genannten Parametern oft nicht hinreichend bekannt, und andererseits können einige der Parameter nicht mit hinreichender Genauigkeit erfasst werden. Daher müssen, um Kavitation zuverlässig auszuschließen, bestimmte Betriebsbereiche gemieden werden. Der nutzbare Betriebsbereich einer hydraulischen Maschine wird dadurch eingeschränkt.

Eine andere Strategie zur Herabsetzung der schädlichen Auswirkungen von Kavitation wird bei manchen Turbinen verfolgt, indem Luft ins Wasser an geeigneten Stellen eingespeist wird. Die Einspeisung der Luft erfordert in der Regel Kompressoren, die einen nicht unerheblichen Energieverbrauch aufweisen. Da wie oben dargelegt nicht genau vorhergesagt werden kann, in welchen Betriebsbereichen schädliche Kavitation auftritt, wird bei diesen Turbinen die Lufteinblasung vorsichtshalber bereits in Betriebsbereichen aktiviert, in denen tatsächlich noch keine oder wenig Kavitation auftritt. Somit entsteht ein Energieverbrauch, der größer ist als es aufgrund des Kavitationsverhaltens der hydraulischen Maschine erforderlich wäre.

Die genannten negativen Effekte könnten vermieden werden, wenn einsetzende Kavitation zuverlässig gemessen werden könnte.

Die Aufgabe der vorliegenden Erfindung ist es daher ein zuverlässiges und einfach anzuwendendes Messverfahren für Kavitation anzugeben, das beim Betrieb der hydraulischen Maschine genutzt werden kann, um einsetzende Kavitation zu detektieren und den Betriebszustand so zu wählen, dass Kavitation gerade noch vermieden wird.

Zur messtechnischen Erfassung von Kavitation sind verschiedene Verfahren bekannt. Eine Möglichkeit stellt zum Beispiel der Einsatz von speziell für sehr hohe Frequenzen (100 kHz bis 1 MHz) ausgelegte Körperschallsensoren dar, die am Turbinengehäuse angebracht werden. Für die Weiterverarbeitung hat sich die Bildung von zwei Kennwerten bewährt (W. Knapp, C. Schneider, R. Schilling "Ein Monitor-System zur akustischen Kavitationsüberwachung von Wasserturbinen", 8. Internationales Seminar "Wasserkraftanlagen", TU Wien, 1994). Kennwert 1 stellt den Summeneffektivwert des hochpassgefilterten Zeitsignals dar. Kennwert 2 ist ein Zählsignal. Das Auswertegerät zählt dabei die Spitzen in einem vordefinierten Zeitfenster.

Es wird außerdem auf folgenden Stand der Technik verwiesen: US 2008/162058 A1 und US 2010/300683 A1.

Der Erfinder hat Varianten des bekannten und im vorigen Abschnitt beschriebenen Mess- und Auswerteverfahrens eingehend untersucht. Bei seinen Untersuchungen hat er festgestellt, dass sich mit diesen Verfahren Kavitation detektieren lässt. Allerdings müssen dazu für jede hydraulische Maschine, bei der Kavitation detektiert werden soll, Grenzwerte bestimmt werden. Übersteigen die aus den Messwerten berechneten Kennwerte die Grenzwerte, so liegt Kavitation vor. Die Untersuchungen, die an 4 verschiedenen hydraulischen Maschinen durchgeführt wurden, ergaben unterschiedliche Grenzwerte für jede dieser hydraulischen Maschinen. Die Grenzwerte an diesen Maschinen konnten nur deshalb bestimmt werden, weil für diese Maschinen bekannt war, bzw. anderweitig beobachtet werden konnte, wann Kavitation auftritt und wann nicht.

Beim Betrieb einer beliebigen hydraulischen Maschine ist weder bekannt noch kann anderweitig beobachtet werden, wann Kavitation auftritt. Daher kann in der Praxis das bekannte und oben beschriebene Mess- und Auswerteverfahren für eine beliebige hydraulische Maschine nicht angewendet werden, da die benötigten Grenzwerte für die hydraulische Maschine nicht bekannt sind bzw. nicht ohne extrem großen Aufwand bestimmt werden können (z.B. durch den Einbau von Fenstern in die wasserführenden Kanäle, durch die das Auftreten von Kavitation visuell beobachtet werden könnte).

Der Erfinder hat erkannt, dass die gestellte Aufgabe dadurch gelöst werden kann, dass ein alternatives Mess- und Auswerteverfahren gefunden wird, das Kavitation dadurch anzeigt, dass die gemessene Größe einen Grenzwert überschreitet, wobei der Grenzwert so gewählt werden kann, dass er global für jede beliebige hydraulische Maschine derselbe ist. Dieser globale Grenzwert kann dann an einer oder auch mehreren gut bekannten und/oder visuell zugänglichen hydraulischen Maschinen festgelegt werden, und für das Messverfahren an einer beliebigen hydraulischen Maschine verwendet werden.

Die gestellte Aufgabe wird durch die Merkmale von Anspruch 1 gelöst.

Die Lösung beruht auf einem neuen und erfinderischen Auswerteverfahren, das im Folgenden geschildert wird. Das erfindungsgemäße Mess- und Auswerteverfahren beruht ebenfalls auf der Messung mit Hilfe der Körperschallsensoren. Die Grundlage für das verwendete Auswerteverfahren ist das Rohsignal von einem oder mehreren Körperschallsensoren. Das Signal des wenigstens einen Sensors wird über einen Zeitraum erfasst, der so lang ist, dass er wenigstens eine Umdrehung des Laufrades umfasst. Ausgehend von diesem Rohsignal werden folgende Auswerteschritte durchgeführt:

Wahl des zu betrachtenden Frequenzbandes: Das erfasste Körpersignal wird mit einem Bandpassfilter gefiltert. Als praktikable Filtergrenzen haben sich f_min=100 kHz und f_max=300 kHz bewährt. Das Verfahren funktioniert jedoch auch noch bei Filtergrenzen, die von den genannten Werten abweichen, z.B. bei f_min=200 kHz und f_max=600 kHz.

Aufbereitung des Signals: Das gefilterte Signal wird ggf. skaliert, um dem Verstärkungsfaktor des verwendeten Sensors zu berücksichtigen. Anschließend wird der Mittelwert des Signals subtrahiert, um einen möglichen Offset des Signals auszugleichen. Es folgt die Entrauschung des Signals mit einer geeigneten Filterfunktion.

Aufteilung des Signals bzgl. der Lage des Laufrades der hydraulischen Maschine: Während der Messung dreht sich das Laufrad der hydraulischen Maschine. Aus der bekannten Umdrehungsgeschwindigkeit kann das Zeitintervall Delta_T_360 berechnet werden, in der sich das Laufrad einmal um 360° gedreht hat. Das Zeitintervall Delta_T_360 wird nun noch weiter unterteilt und das entrauschte Signal wird in diesen Zeitintervallen separat betrachtet. Der Erfinder hat festgestellt, dass es zweckmäßig ist die Aufteilung des Signals auf Zeitintervalle durchzuführen, die einer Laufraddrehung von 1° entspricht, d.h. das entsprechende Zeitintervall ist Delta_T_1 = Deita_T_360 / 360. Das Verfahren funktioniert jedoch auch, wenn Zeitintervalle genommen werden, die größer oder kleiner sind, beispielsweise für eine Laufradumdrehung von 0,1° bis 10°. Bei kleineren Zeitintervallen steigt der benötige Rechenaufwand und bei größeren Intervallen, verschlechtert sich die Auflösung bzgl. der Laufradposition bzw. die Sensibilität des Messverfahrens, da über einen größeren Drehwinkel des Laufrades integral gemessen wird. Die nachfolgenden Auswertungen bis zur Berechnung des Kennwertes werden auf den bezüglich dieser Zeitintervalle aufgeteilten Teilsignalen durchgeführt.

Spektrale Zerlegung der aufbereiteten Teilsignale: Das Signal wird für jedes Zeitintervall spektral zerlegt, und das erhaltene Spektrum gibt Aufschluss über die spektrale Zusammensetzung des Signals.

Anwendung eines Ereigniszählers: Auf das jeweilige Spektrum wird ein Ereigniszähler angewendet. Hierzu muss ein Schwellwert festgelegt werden. Dieser Schwellwert ist global, d.h. nicht abhängig von der gemessenen hydraulischen Maschine. Details zur Festlegung des Schwellwertes werden weiter unten beschrieben. Ein zu zählendes Ereignis liegt dann vor, wenn wenigstens ein Auswertepunkt oberhalb des so festgelegten Schwellwerts zu liegen kommt. Liegen mehrere aufeinanderfolgende Punkte oberhalb der Schwelle, so liegt ebenfalls ein einzelnes Ereignis vor, das jedoch höher gewichtet wird, wie im Folgenden beschrieben wird.

Berechnung des Kennwertes: Die Berechnung des Kennwertes beruht auf einer Gewichtung der einzelnen Ereignisse bezüglich ihrer Ausdehnung im Frequenzband. Die Ausdehnung der Ereignisse im Frequenzband wird dadurch bestimmt, dass die unmittelbar aufeinander folgenden Punkte im Frequenzband gezählt werden, die oberhalb des Schwellwertes liegen. Das Absinken der Amplitude unterhalb des Schwellwertes zeigt somit das Ende des Ereignisses an. Zur Gewichtung der Ereignisse bzgl. ihrer Ausdehnung sind viele Metriken denkbar. Der Erfinder hat folgende Metrik verwendet: Pro Spektrum ergeben sich die Zählwerte Z1 und Z2: Z1 ist die Anzahl der Ereignisse und Z2 die Anzahl der Punkte im Frequenzband, die oberhalb des Schwellwertes liegen. Über alle betrachteten Spektren wird die Summe von Z1 und Z2 gebildet. Es werden beide Summen multipliziert. Der Kennwert ist das Produkt dieser Summen allerdings normiert auf eine Umdrehung der hydraulischen Maschine. Wie gesagt, können auch andere geeignete Metriken verwendet werden.

Vergleich mit dem Grenzwert: Der Kennwert wird mit einem Grenzwert verglichen. Der Grenzwert ist für alle hydraulischen Maschinen derselbe. Überschreitet der Kennwert den Grenzwert, dann liegt Kavitation vor, und es können geeignete Mittel zur Vermeidung von Schäden ergriffen werden (beispielsweise die Änderung des Betriebszustandes oder das Einblasen von Luft).

Globale Bestimmung des Schwell- und des Grenzwertes: Der Schwell- und der Grenzwert wurde vom Erfinder anhand der 4 untersuchten hydraulischen Maschinen festgelegt. Es ergaben sich für alle 4 Maschinen derselbe Schwell- und derselbe Grenzwert. Der absolute Wert des Schwell- und des Grenzwertes hängt dabei nur vom Verstärkungsfaktor bzw. der Sensitivität der verwendeten Sensoren und den Parametern des Auswerteverfahrens ab (z.B. vom betrachteten Frequenzband und der zeitlichen Abtastrate der Sensoren). Aus dem oben gesagten ist auch unmittelbar ersichtlich, dass die absoluten Werte von Schwell- und Grenzwert voneinander abhängen. So ergeben sich ähnliche Resultate, wenn beispielsweise der Schwellwert etwas niedriger und dafür der Grenzwert entsprechend höher gewählt wird. Außerdem wirken sich moderate Änderungen in der Wahl des Grenzwerts und des Schwellwerts nur geringfügig auf die abgeleitete Aussage bezüglich des Kavitationszustands der Maschine aus, da der Kennwert bei Kavitationsbeginn außerordentlich steil ansteigt. Daher beruht die hier dargelegte Erfindung nicht auf den absoluten Werten von Schwell- und Grenzwert, sondern auf den oben beschriebenen Auswerteschritten. Die beschriebene erfindungsgemäße Abfolge der Auswerteschritte ermöglicht es erst, global gültige Wertepaare für Schwell- und Grenzwert festzulegen. Es sei hier daher nur ein mögliches Wertepaar für Schwell- und Grenzwert angegeben: Für die vom Erfinder benutzen Sensoren ergab sich ein möglicher Schwellwert zu 0,01 V² (für das Frequenzband 100 bis 300 kHz) und ein möglicher Grenzwert zu 100. Man kann auch mit mehreren Schwell- und Grenzwerten arbeiten. Wenn man z.B. bereits beginnende Kavitation anzeigen möchte, so wählt man einen zweiten niedrigeren Schwellwert und einen zweiten entsprechenden Grenzwert. Für das Auftreten von beginnender Kavitation legte der Erfinder einen Schwellwert von 0,01 V² und einen Grenzwert von 10 fest (ebenfalls unter den Bedingungen, die im vorigen Abschnitt genannt wurden).

Abschließend sei noch erwähnt, dass der oder die verwendeten Sensoren natürlich an geeigneten Stellen der hydraulischen Maschine angebracht werden müssen (z.B. auf dem Turbinendeckel oder an der Saugrohrwand in unmittelbarer Nähe des Laufrades).

## Patentansprüche

1. Verfahren zur Detektion von Kavitation beim Betrieb einer hydraulischen Maschine, welches wenigstens ein Laufrad aufweist, mit Hilfe von wenigsten einem Körperschallsensor, **dadurch gekennzeichnet, dass** folgende Verfahrensschritte durchgeführt werden: Erfassung des Signals des wenigstens einen Sensors über einen Zeitraum, der wenigstens eine Umdrehung des Laufrades umfasst; Bandpassfilterung des Signals; Aufbereitung des Signals; zeitliche Aufteilung des Signals in geeignete Zeitintervalle, wobei die hiernach folgenden nächsten drei Schritte auf den einzelnen Teilsignalen separat durchgeführt werden: (1) spektrale Zerlegung; (2) Anwendung eines Ereigniszählers im Frequenzraum, wobei ein Ereignis dann vorliegt, wenn ein Signalpunkt oberhalb einem festgelegten Schwellwert liegt, wobei mehrere aufeinanderfolgende Signalpunkte oberhalb des Schwellwertes als ein einzelnes Ereignis gelten; (3) Bestimmung der Ausdehnung der Ereignisse im Frequenzband; Berechnung wenigstens eines Kennwertes aus der Anzahl und der Ausdehnung der Ereignisse aller Teilsignale, wobei eine Metrik verwendet wird, die eine Multiplikation der Anzahl von Ereignissen mit der Ausdehnung der Ereignisse beinhaltet; Vergleich des wenigstens einen Kennwertes mit wenigstens einem Grenzwert.

## Claims

1. Method for detecting cavitation during the operation of a hydraulic machine, which has at least one impeller, with the aid of at least one structure-borne sound sensor, **characterized in that** the following method steps are carried out:
detection of the signal of the at least one sensor over a time period which comprises at least one rotation of the impeller; bandpass filtering of the signal; preparation of the signal; temporal division of the signal into suitable time intervals, wherein the next three steps following this are carried out separately on the individual partial signals: (1) spectral decomposition; (2) application of an event counter in the frequency domain, wherein an event is present if a signal point lies above a fixed threshold value, wherein a number of successive signal points above the threshold value count as a single event; (3) determination of the extent of the events in the frequency band; calculation of at least one characteristic value from the number and the extent of the events of all the partial signals, wherein a metric which contains a multiplication of the number of events with the extent of the events is used; comparison of the at least one characteristic value with at least one limit value.

## Revendications

1. Procédé de détection de cavitation lors du fonctionnement d'une machine hydraulique comportant au moins une roue à aubes à l'aide d'au moins un capteur de bruit de structure, **caractérisé par** les étapes de procédé consistant à : détecter le signal dudit au moins un capteur pendant une période de temps comprenant au moins une révolution de la roue à aubes ; filtrer le signal par filtrage passe-bande ; traiter le signal ; diviser temporellement le signal en intervalles de temps appropriés, dans lequel les trois étapes suivantes sont effectuées séparément sur les signaux partiels individuels :
(1) effectuer une décomposition spectrale ; (2) appliquer un compteur d'événements dans l'espace de fréquence, dans lequel un événement n'est présent que lorsqu'un point de signal se situe au-dessus d'une valeur de seuil prédéterminée, dans lequel une pluralité de points de signal successifs situés au-dessus de la valeur de seuil sont considérés comme étant un événement unique ; (3) déterminer l'étendue des événements dans la bande de fréquences ; calculer au moins une valeur caractéristique à partir du nombre et de l'étendue des événements de tous les signaux partiels en utilisant une métrique qui comprend une multiplication du nombre d'événements par l'étendue des événements ; comparer ladite au moins une valeur caractéristique à au moins une valeur limite.
